# FASCICULE DE BREVET EUROPEEN

(11) **EP 3 402 698 B1**
(45) Date de publication et mention de la délivrance du brevet: **08.07.2020**
(21) Numéro de dépôt: 17704291.8
(22) Date de dépôt: 11.01.2017
(51) Int. Cl.: B60R 13/10

(54) **PLAQUE D'IMMATRICULATION ET PROCÉDÉ DE VÉRIFICATION**
KENNZEICHEN UND VERIFIZIERUNGSVERFAHREN
REGISTRATION PLATE AND VERIFICATION METHOD

(30) Priorité: 11.01.2016 FR 1650176; 20.04.2016 MY PI2016701462
(43) Date de publication de la demande: 21.11.2018
(73) Titulaire: SURYS, 77607 Marne la Vallée Cedex 3 (FR)
(72) Inventeur: SOUPARIS, Hugues, 75012 Paris (FR)
(74) Mandataire: Bouvier, Thibault
(86) Numéro de dépôt international: PCT/FR2017/050060
(87) Numéro de publication internationale: WO 2017/121956

(56) Documents cités:
- DE-A1- 2 841 551
- DE-A1-102007 000 880
- DE-U1-202012 005 364
- DE-U1-202012 005 364
- US-A- 5 866 236

## Description

### DOMAINE DE L'INVENTION

La présente invention concerne le domaine des plaques d'immatriculation pour véhicules automobiles, également appelées plaques minéralogiques.

Une plaque d'immatriculation est une plaque portant un numéro d'immatriculation, c'est-à-dire un ensemble de caractères se présentant sous la forme d'une combinaison unique de chiffres ou de lettres (pour une zone géographique donnée), destiné à identifier facilement et de manière univoque un véhicule automobile (voiture, moto, véhicule agricole, etc.). La plaque d'immatriculation est donc destinée à être fixée à un véhicule automobile.

En fonction de la réglementation locale, le numéro d'immatriculation est généralement associé soit au véhicule automobile, soit à son propriétaire.

L'attribution d'un numéro d'immatriculation est généralement réglementée, et au moins sous contrôle d'une administration.

Il apparaît nécessaire que la distribution des plaques d'immatriculation soit contrôlée, et que lesdites plaques d'immatriculation soient sécurisées.

À cet effet, il est connu le document WO03107309 qui propose une solution consistant à sécuriser la plaque d'immatriculation par un ensemble de codes-barres, et le document DE 20 2012 005364 U1 qui divulgue une plaque d'immatriculation selon le préambule de la revendication 1.

La présente invention vise à proposer une autre solution de sécurisation de plaque d'immatriculation ainsi qu'une solution de distribution sécurisée des plaques d'immatriculation.

### RESUME DE L'INVENTION

Plus précisément, l'invention concerne selon un premier de ses objets, une plaque d'immatriculation (100) pour véhicule automobile selon la revendication 1.

Dans un mode de réalisation, le film rétro réfléchissant comprend en outre un ensemble d'au moins un filigrane (170).

Dans un mode de réalisation, le réseau lenticulaire (190) est intégré à la plaque acrylique (130).

Dans un mode de réalisation, la structure diffractive est numérotée, destructible, et partiellement démétallisée.

De préférence, l'impression de personnalisation sécurisée est imprimée sur la partie démétallisée de la structure diffractive.

Dans un mode de réalisation, la structure diffractive se présente sous forme d'étiquette autocollante et comprend l'empilement des couches successives suivant :
- une couche d'adhésif à froid (115), destinée à coller la structure diffractive sur le film rétro réfléchissant ;
- une couche partielle de détachement (113);
- une couche réflective (111) en partie démétallisée ;
- une couche de vernis holographique (114) ;
- un film protecteur (116) ;

Ou l'empilement des couches successives suivant :
- une couche d'adhésif à froid (115), destinée à coller la structure diffractive sur le film rétro réfléchissant ;
- une couche réflective (111) en partie démétallisée ;
- une couche de vernis holographique (114);
- une couche partielle de détachement (113) ; et
- un film protecteur (116).

Dans un mode de réalisation, la structure diffractive se présente sous forme de marquage à chaud, et comprend l'empilement des couches successives suivant :
- une couche d'adhésif pour transfert à chaud éventuellement réticulable (112), destinée à coller la structure diffractive sur le film rétro réfléchissant ;
- une couche réflective (111) en partie démétallisée ;
- une couche de vernis holographique (114) ; et
- une couche de vernis de protection (117).

Dans un mode de réalisation, la structure diffractive comprend au moins une représentation graphique parmi :
- une représentation graphique (118) qui présente un effet optique achromatique,
- une représentation graphique (119) qui présente un effet visuel d'embossage, et
- une représentation graphique qui présente un effet de grand angle en fonction de l'angle d'observation.

Dans un mode de réalisation, le numéro d'immatriculation comprend un ensemble de caractères, les deux images représentant le dernier caractère du numéro d'immatriculation.

Dans un mode de réalisation, l'encre utilisée pour l'impression de personnalisation sécurisée contient un pigment de sécurité ou un marqueur.

Selon un autre de ses objets, l'invention concerne un procédé de vérification d'une plaque d'immatriculation d'un véhicule automobile, comprenant des étapes consistant à :
- fabriquer (1000) une plaque d'immatriculation selon l'invention, et sur la plaque d'immatriculation ainsi fabriquée :
- réaliser (1010) une capture optique de l'impression de personnalisation sécurisée,
- décoder (1020) ladite impression de personnalisation sécurisée,
- vérifier (1030) que ladite impression de personnalisation sécurisée décodée contient l'une au moins des données relatives au véhicule automobile parmi :
- le numéro d'immatriculation,
- le numéro du certificat d'enregistrement,
- le numéro de châssis,
- le numéro de moteur,
- le modèle,
- la couleur dudit véhicule automobile ;
le procédé comprenant optionnellement en outre une étape consistant à vérifier (1040) que ladite donnée décodée est identique à une donnée correspondante inscrite sur le véhicule automobile, sur le moteur ou sur un certificat d'enregistrement dudit véhicule automobile.

Grâce à la présente invention, la mise sur le marché de fausses plaques d'immatriculation est rendue beaucoup plus difficile ou plus facilement décelable.

De manière similaire, la personnalisation et l'enregistrement indu d'une vraie plaque d'immatriculation ne peuvent être réalisés, même sous la contrainte.

La présente invention permet d'obtenir une plaque d'immatriculation traçable et sécurisée de manière optique, permettant d'assurer la traçabilité complète de sa fabrication et le contrôle de celle-ci une fois mise en service.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

- la figure 1 illustre une coupe transversale d'un mode de réalisation d'une partie d'une plaque d'immatriculation selon l'invention,
- les figures 2A à 2C illustrent en coupe transversale trois variantes d'un mode de réalisation d'une partie d'une structure diffractive selon l'invention,
- la figure 3 illustre un mode de réalisation d'une structure diffractive selon l'invention,
- la figure 4 illustre l'observation et le résultat d'un effet « grand angle » sur une plaque d'immatriculation selon l'invention,
- les figures 5A et 5B illustrent l'effet optique achromatique d'un mode de réalisation d'une structure diffractive selon l'invention, observé respectivement sous deux angles d'observation,
- la figure 6 illustre une coupe transversale d'un mode de réalisation d'un film rétro réfléchissant,,
- la figure 7 illustre un mode de réalisation du procédé selon l'invention,
- la figure 8A illustre un mode de réalisation d'une plaque d'immatriculation vierge selon l'invention, et
- la figure 8B illustre la plaque d'immatriculation de la figure 8A une fois personnalisée.

### DESCRIPTION DETAILLEE

### Structure

Une plaque d'immatriculation 100 répond généralement à des normes, contraintes ou réglementations locales.

Elle présente généralement une forme globalement rectangulaire. Le numéro d'immatriculation 210 devant pouvoir être lu par un œil humain ou un capteur électronique, on peut définir par convention qu'une plaque d'immatriculation comprend un bas et un haut. De même, qu'il s'agisse d'une plaque d'immatriculation destinée à être fixée à l'avant ou à l'arrière d'un véhicule automobile 300, la plaque d'immatriculation présente une face arrière INT (interne ou intérieure) destinée à être au contact dudit véhicule automobile, et une face avant EXT (externe ou extérieure), destinée à pouvoir être reconnue visuellement ou par un capteur optique.

Avant que le numéro d'immatriculation soit imprimé sur celle-ci, une plaque d'immatriculation est dite « vierge ».

Une plaque d'immatriculation doit protéger le numéro d'immatriculation contre les agressions extérieures (naturelles ou non) telles que par exemple les radiations UV, les chocs, les rayures, et les différentes conditions environnementales.

Au sens de la présente invention, sauf précision contraire, on entend indistinctement les termes « couche » ou « film ». En revanche, le terme « plaque » est substantiellement différent d'un film par ses propriétés de rigidité : un film peut être bobiné, pas une plaque.

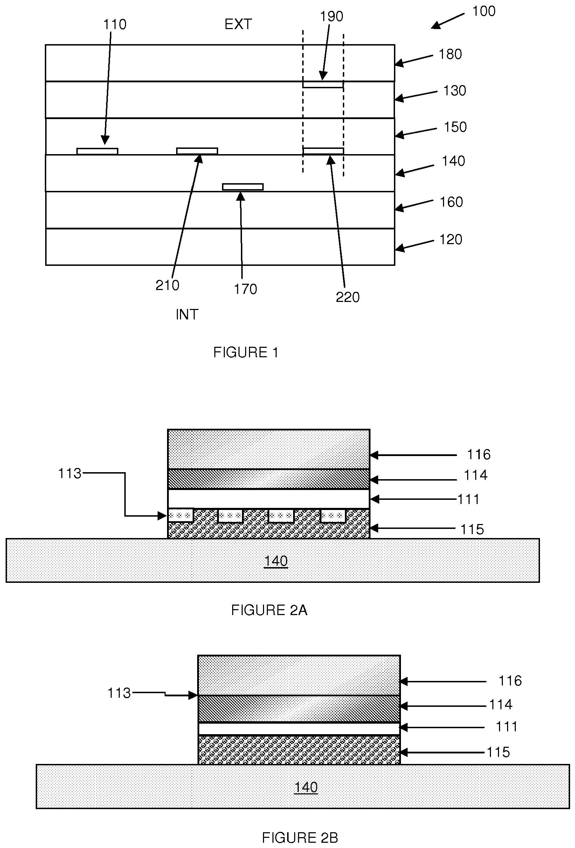

Comme illustré figure 1, une plaque d'immatriculation comprend :
- une plaque acrylique 130 transparente, et
- un film rétro réfléchissant 140, en l'espèce sécurisé.

L'ensemble étant fixé à un support 120 de plaque d'immatriculation du véhicule.

De préférence, la face externe de la plaque acrylique est protégée par une couche protectrice 180, en l'espèce d'une épaisseur de 0,01 mm, et par exemple en PET. Cette couche est destinée typiquement à protéger la plaque acrylique de rayures lors de la fabrication 1000 de la plaque d'immatriculation, ou lors du stockage des plaques acryliques (risques de frottements les unes sur les autres).

Alternativement, cette couche de protection peut-être remplacée par un jeu de bossage en périphérie permettant l'empilement des plaques sans risque de frottements intempestifs conduisant à créer des rayures des faces externes.

De préférence, la face interne de la plaque acrylique est recouverte d'une couche adhésive 150, en l'espèce d'une épaisseur de 0,05 mm, et d'une couche de protection, en l'espèce du type papier siliconé (non représenté). Cette couche de protection est éliminée préalablement au laminage de la plaque acrylique sur le film rétro-réfléchissant.

### Plaque acrylique

De préférence, la plaque acrylique 130 est réalisée à partir de polyméthacrylate de méthyle (PMMA) ou de tout autre matériau plastique présentant une transparence et une résistance climatique et mécanique similaire.

Dans un mode de réalisation, la plaque acrylique présente une épaisseur de 3 mm, et présente une capacité de flexion.

La plaque acrylique peut subir une déformation élastique. Si elle subit une déformation plastique, alors elle est considérée comme non conforme. La plaque acrylique ne peut être repliée sur elle-même. Elle est « intègre », c'est-à-dire qu'elle ne présente aucune découpe ou prédécoupe interne.

Par ailleurs la plaque acrylique doit être transparente incolore dans le domaine du visible, résister aux UV sans présenter de jaunissement, protéger le numéro de la plaque et la personnalisation des agressions extérieures (chimiques comme mécaniques : chocs et rayures).

### Film rétro réfléchissant

Le film rétro réfléchissant 140, connu en soi, est déposé sur toute la surface du support de la plaque d'immatriculation.

Le film rétro réfléchissant permet d'obtenir une bonne visibilité du numéro d'immatriculation, il réfléchit la lumière sous le même angle que l'angle d'incidence de celle-ci.

Par exemple, on peut utiliser des films rétro réfléchissants vendus par Orafol sous la marque déposée Oralite, ou Eurolux CLP2000 vendus par IRC Ces films comprennent une résine alkyde ; ils sont imperméables, très résistants à l'abrasion ainsi qu'aux impacts et présente également une excellente résistance à la corrosion et aux solvants. En outre, la surface de ces films présente une très bonne imprimabilité.

Le caractère rétro réfléchissant du film est assuré par exemple par des billes (ou perles) de verre 141, en l'espèce des billes de verre catadioptriques incorporées dans une couche de matériau plastique transparent ; et respecte les différentes normes, règlements et standards en la matière.

Le film rétro réfléchissant peut présenter localement ou sur toute sa surface une ou plusieurs couleurs, une couleur donnée pouvant être représentative d'une utilisation spécifique par exemple voiture de location, taxi, corps diplomatique, gouvernement, royauté, etc.

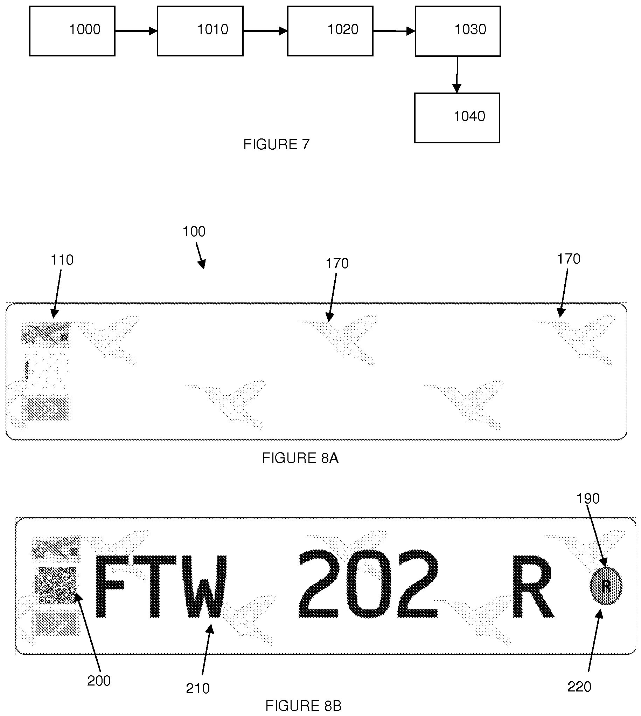

Le film rétro réfléchissant peut également comprendre un ensemble d'au moins un filigrane 170, de préférence visible sous n'importe quel angle d'observation, et connu par exemple du document EP 1646024. Sur la figure 8A, le filigrane 170 représente un colibri.

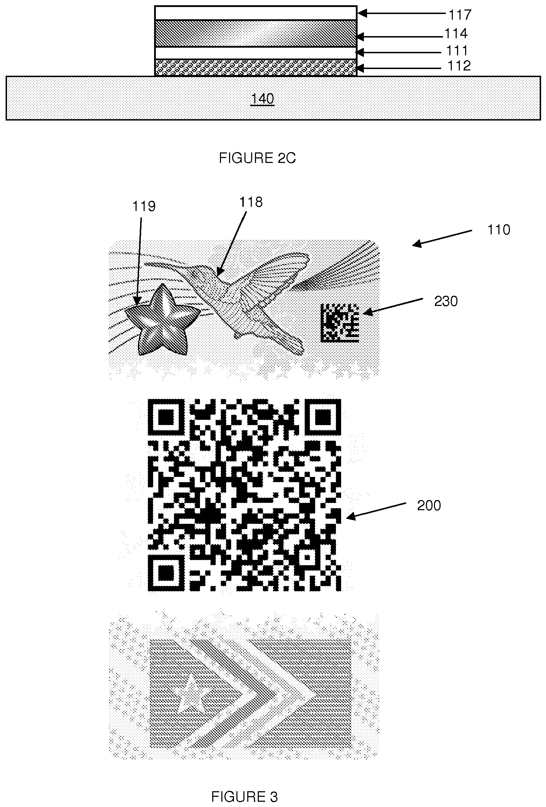

Chaque plaque d'immatriculation comprend également un numéro de série 230 disposé sur le film rétro réfléchissant, et qui permet de tracer celle-ci. En l'espèce le numéro de série se présente sous la forme de QR code imprimé sur la structure diffractive 110 décrite ci-dessous, comme illustré figure 3. A titre alternatif ou en combinaison, le numéro de série 230 peut être inscrit en clair pour permettre une lecture à l'œil ou par reconnaissance optique (OCR).

On peut prévoir que le film rétro réfléchissant est solidaire du support de plaque par l'intermédiaire d'une couche d'adhésif 160.

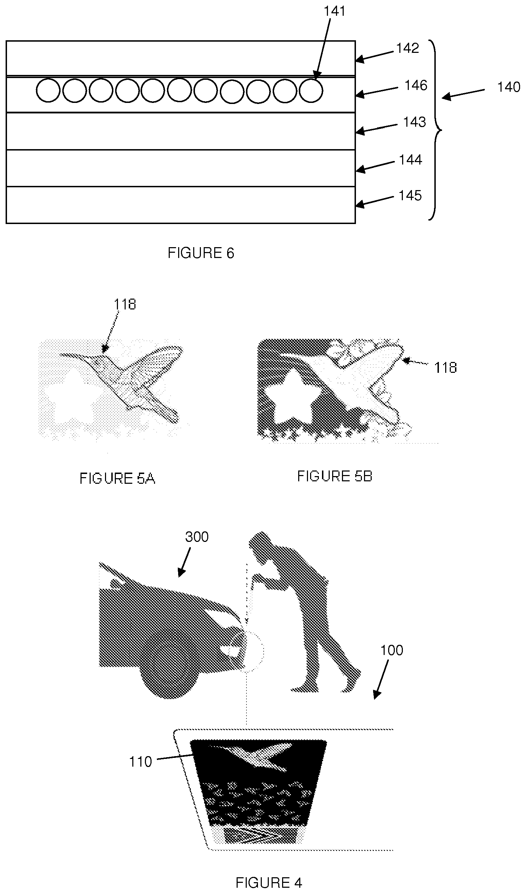

Un exemple de film rétro réfléchissant est illustré sur la figure 6. Dans ce cas, le film rétro réfléchissant 140 comprend une pluralité de couches, en l'espèce une couche rétro réfléchissante 146 comprenant les perles de verre 141 et la couche réflective, sur laquelle est déposée une couche protectrice 142, et sous laquelle est déposée une couche de scellage opaque 143, une couche d'adhésif 144 et une autre couche protectrice 145.

### Numéro d'immatriculation

Le numéro d'immatriculation 210, en l'espèce égal à FTW 202 R sur la figure 8B, est imprimé sur le film rétro réfléchissant, par exemple par gravure laser, ou préférentiellement par marquage laser toner ou éventuellement par marquage jet d'encre avec réticulation UV.

### Structure diffractive

On prévoit également une structure diffractive 110 numérotée, de préférence destructible, et de préférence partiellement démétallisée.

Par « structure diffractive », on entend une structure diffractive imageante changeant d'apparence selon l'inclinaison de l'observation (plus connue sous l'acronyme DOVID pour Diffractive Optically Variable Image Device en langue anglaise), et par exemple un hologramme.

Par « destructible » on entend que la structure diffractive est au moins partiellement détruite si celle-ci est décollée de son support.

Le numéro de la structure diffractive est en l'espèce un numéro de série 230. En l'espèce le numéro de la structure diffractive est confondu avec le numéro de série 230 de la plaque d'immatriculation avant l'étape de personnalisation, ce qui est un élément fort de la sécurisation du substrat car il permet de tracer les plaques d'immatriculation vierges fournies aux personnes en charge de la personnalisation des plaques et qui permet de déceler un éventuel trafic. En l'espèce, le numéro de série 230 se présente sous forme de code-barres 2D, éventuellement présent aussi en caractères alphanumériques comme exposé précédemment. En particulier le code-barres 2D est un Datamatrix, qui de préférence est imprimé sur fond clair, et en particulier sur fond blanc, ce qui permet d'optimiser la lecture dudit numéro en lumière ambiante, comme exposé ultérieurement dans la partie « fonctionnement » ci-après.

Dans un mode de réalisation, le numéro de série 230 de la structure diffractive est un identifiant unique par structure diffractive. Dans un autre mode de réalisation, un numéro de la structure diffractive peut être commun à une pluralité de structures diffractives, par exemple pour identifier des lots, un « lot » correspondant par exemple à un ensemble de plaques d'immatriculation distribuées à un revendeur individuel.

On peut prévoir une structure diffractive, par exemple un hologramme, différente par typologie de véhicule, et par exemple par niveau de taxe. On peut aussi prévoir de fournir un numéro de série 230 par revendeur ou numéro de série 230 par lot de plaques d'immatriculation attribué à un revendeur. Il est alors possible de tracer ledit revendeur de la plaque d'immatriculation par le numéro de série 230 porté sur la structure diffractive. Ensuite les registres et/ou bases de données permettent d'identifier le nombre de plaques de chaque type et leur utilisation par le revendeur. Le numéro de série 230 permet donc astucieusement de surveiller l'activité des revendeurs.

En l'espèce, le support de la structure diffractive est le film rétro réfléchissant sur lequel la structure diffractive est déposée. La structure diffractive est solidaire du film rétro réfléchissant par exemple par une couche d'adhésif 115, 112.

Les effets optiques de la structure diffractive sont adaptés à une plaque d'immatriculation et facilement reconnaissables, contrôlables par une autorité aussi bien de jour que de nuit, aidée dans ce cas par exemple d'un outil aussi simple qu'une lampe électrique de poche.

Dans un mode de réalisation, la structure diffractive 110 se présente sous forme d'étiquette autocollante. En l'espèce, l'étiquette présente une épaisseur comprise entre 30 et 150 µm et préférentiellement comprise entre 50 et 100µm.

Une première variante est illustrée en figure 2A.

Dans cette première variante, la structure diffractive comprend l'empilement des couches successives suivant :
- une couche d'adhésif, en l'espèce un adhésif à froid 115, destinée à coller la structure diffractive sur le film rétro réfléchissant 140 ;
- une couche de détachement 113, de préférence partielle, par exemple une cire, qui confère le caractère destructible à la structure diffractive ;
- une couche réflective 111, en l'espèce métallique, par exemple de l'aluminium, du chrome, un alliage, etc...en partie démétallisée ;
- une couche de vernis holographique 114 (vernis d'estampage) qui porte des microstructures diffractantes ; et
- un film protecteur 116, par exemple polyester, et en l'espèce en PET.

Une deuxième variante est illustrée en figure 2B.

Dans cette deuxième variante, la structure diffractive comprend l'empilement des couches successives suivant :
- une couche d'adhésif 115, en l'espèce un adhésif à froid, destinée à coller la structure diffractive sur le film rétro réfléchissant ;
- une couche réflective 111, en l'espèce métallique, par exemple de l'aluminium, du chrome, un alliage, etc. de préférence en partie démétallisée;
- une couche de vernis holographique (vernis d'estampage) 114;
- une couche de détachement 113, de préférence partielle et par exemple une cire, qui confère le caractère destructible à la structure diffractive ; et
- un film protecteur 116, par exemple polyester, et en l'espèce en PET.

Dans un autre mode de réalisation, illustré en figure 2C, la structure diffractive se présente sous forme de transfert. En l'espèce, elle présente une épaisseur comprise entre 3 et 20 µm et préférentiellement comprise entre 5 et 10µm.

Dans ce mode de réalisation, la structure diffractive comprend l'empilement des couches successives suivant :
- une couche d'adhésif 112, en l'espèce un adhésif à chaud éventuellement combiné à un adhésif réticulable par exemple aux UV, destinée à coller la structure diffractive sur le film rétro réfléchissant ;
- une couche réflective 111, en l'espèce métallique, par exemple de l'aluminium, du chrome, un alliage, etc. en partie démétallisée ;
- une couche de vernis holographique (vernis d'estampage) 114 ;
- une couche de vernis de protection (optionnnelle) 117 différent du film protecteur 116.

Quel que soit le mode de réalisation, la couche réflective 111 est métallique et opaque. La démétallisation, qui consiste à enlever, sur un ensemble d'au moins une zone, tout ou partie de l'épaisseur de ladite couche réflective 111, ce qui permet de rendre la structure diffractive transparente sur ledit ensemble d'au moins une zone.

Dans ce cas, la structure diffractive est transférée à chaud sur le film rétro-réfléchissant et la réticulation est amorcée s'il y a lieu par exemple par exposition à un rayonnement ultra-violet. L'impression de personnalisation sécurisée décrite ci-dessous est alors réalisée sur la couche de vernis de protection ou sur la couche de vernis d'estampage.

Dans tous les cas, la couche de vernis holographique 114 de la structure diffractive peut être réalisée par embossage à chaud (hot-embossing) ou moulage (casting).

Dans un mode de réalisation, la structure diffractive 110 comprend au moins une représentation graphique 118, par exemple un symbole, qui présente un effet optique achromatique d'inversion de contraste, c'est-à-dire que l'image observée est non colorée et représente le même symbole (même contenu informatif) sous différents angles d'observation, mais le contraste de celle-ci diffère selon l'angle d'observation, voir figure 5A et figure 5B dans lesquelles le symbole représente essentiellement un colibri et son fond, et passe de positif et négatif ou inversement en fonction d'une inclinaison d'observation gauche ou droite par rapport à une direction verticale.

On peut également prévoir que la structure diffractive présente au moins une représentation graphique 119, par exemple un symbole, qui présente un effet visuel d'embossage, c'est-à-dire une impression de bas-relief, autour d'un certain cône d'observation, voir figure 3.

On peut également prévoir que la structure diffractive présente au moins une représentation graphique, par exemple un symbole, qui présente un effet de « grand angle » en fonction de l'angle d'observation, en particulier sous éclairage flash la nuit. En l'espèce, en atmosphère sombre, avec un angle d'éclairage et un angle d'observation sensiblement les mêmes et supérieurs à une valeur seuil, certains composants de la structure diffractive apparaissent diffractants, en l'espèce en couleur verte. En l'espèce l'angle d'éclairage et l'angle d'observation sont disposés selon une direction sensiblement verticale, comme illustré figure 4.

Dans ce cas, la structure diffractive est réalisée à partir de réseaux (non illustrés) dont le pas est calculé de manière à renvoyer un maximum de luminosité lorsque l'angle entre le faisceau incident (la source) et le faisceau émergent dirigé vers l'œil de l'observateur ou le capteur optique est faible (de l'ordre d'une dizaine de degrés). Ce n'est pas un angle habituel pour l'observation des structures diffractives de sécurité (dont les angles d'observation vont typiquement de 30° à 50°). Structurellement, les réseaux adaptés à cet effet ont un pas compris entre 300 et 400nm, préférentiellement entre 310 et 360 nm.

Avantageusement on combinera dans cette zone plusieurs réseaux ayant un pas et/ou un angle azimutal différent de manière à créer des animations visibles lorsque l'observateur se déplace latéralement devant le véhicule.

Avantageusement cette partie peut comprendre des éléments colorés imprimés en surface tels qu'un drapeau, une marque propre à signaler la catégorie d'un véhicule ou une année. Cette (ces) couleur(s) est (sont) fixe(s) quelles que soient les conditions d'observation.

La métallisation partielle de l'étiquette permet de maximiser l'efficacité optique des réseaux dans les parties supérieures et inférieures de la structure diffractive et d'assurer une continuité optique entre ces deux parties par les éléments fins de métal qui apparaissent à l'emplacement du QR code, empêchant ainsi la récupération indue d'une partie de l'étiquette avec une impression de personnalisation sécurisée illégitime. Par ailleurs ces éléments fins sont optimisés de manière à ne pas perturber la lecture du QR code quelles que soient les conditions d'éclairage ambiantes comme expliqué par ailleurs.

De préférence les éléments de métallisation créent un lien entre les parties supérieures et inférieures de la structure diffractive.

### Impression de personnalisation sécurisée

On prévoit que la plaque d'immatriculation comprend une impression de personnalisation sécurisée 200.

L'impression de personnalisation sécurisée est un motif graphique qui permet une vérification hors ligne ou en ligne de celui-ci. Elle est calculée à partir de données relatives au propriétaire du véhicule automobile, et éventuellement à partir de données du revendeur de plaque d'immatriculation, et se présente en l'espèce sous la forme d'un code-barres 2D, notamment un QR code, et en particulier un QR code signé électroniquement.

De préférence, l'impression de personnalisation sécurisée est imprimée sur la partie démétallisée de la structure diffractive, ce qui facilite la lecture par un capteur optique, en particulier sous éclairage flash, typiquement en atmosphère sombre, et notamment la nuit. En effet, la nature réfléchissante de la structure diffractive, due au film rétro réfléchissant, peut nuire au contrôle de celui-ci en atmosphère sombre, typiquement la nuit. Typiquement, sous éclairage flash en atmosphère sombre, la partie métallisée de la structure diffractive peut éblouir (saturer) le capteur optique, de sorte que la structure diffractive peut apparaître noir. Le contraste entre le QR code et la structure diffractive est alors insuffisant pour permettre la lecture.

L'impression de personnalisation sécurisée est éventuellement encryptée et imprimée de préférence en même temps que le numéro d'immatriculation.

L'impression de personnalisation sécurisée est de préférence incluse dans la structure diffractive. La concentration de l'impression de personnalisation sécurisée et de la structure diffractive dans une zone de dimension relativement restreinte de la plaque d'immatriculation facilite la lecture de ladite impression de personnalisation sécurisée et de ladite structure diffractive par un capteur optique pour permettre en une seule acquisition l'authentification de la structure diffractive et la lecture de l'impression de personnalisation sécurisée.

De préférence, l'encre (ou le toner) utilisée pour l'impression de personnalisation sécurisée contient un pigment de sécurité ou un marqueur (tag) de type terre rare, ADN ou autre, permettant de contrôler l'approvisionnement du matériel d'impression et l'authenticité du marquage de la plaque.

### Effet moiré

Dans un mode de réalisation, on prévoit que la plaque d'immatriculation comprend un ensemble d'au moins deux images 220 destiné à présenter un effet moiré, de préférence imprimé sur le film rétro réfléchissant au moment de la personnalisation du film rétro-réfléchissant comportant la structure diffractive. En l'espèce, on prévoit que l'ensemble comprend uniquement deux images, et que les deux images présentent un contenu informatif identique.

Dans un mode de réalisation, on prévoit que les deux images représentent le dernier caractère du numéro d'immatriculation, ce qui simplifie doublement le contrôle ultérieur : d'une part du fait que seules deux images sont à vérifier, et d'autre part du fait que le dernier caractère dudit numéro d'immatriculation est nécessairement présent sur la plaque.

Dans un autre mode de réalisation, on prévoit que les deux images dépendent des informations de personnalisation, par exemple les deux images représentent un caractère de contrôle dépendant du numéro d'immatriculation.

### Réseau lenticulaire

La plaque d'immatriculation peut comprendre en outre un réseau lenticulaire 190, c'est-à-dire une structure (non diffractive) à micro lentilles semi cylindriques, apposé par exemple par collage.

De préférence, le réseau lenticulaire est apposé au droit desdites au moins deux images, comme illustré par les pointillés sur la figure 1.

De préférence le réseau lenticulaire 190 est au contact de la plaque acrylique 130. L'épaisseur de la plaque acrylique 130 permet de supporter ledit réseau lenticulaire 190, son épaisseur garantit à la fois la distance de focalisation entre le réseau lenticulaire et la surface imprimée portant les images et la rigidité de l'ensemble à apposer sur le véhicule et, par la même, la bonne stabilité de la lisibilité des différentes informations et des effets optiques.

De préférence le réseau lenticulaire est créé lors de la fabrication de la plaque d'immatriculation, typiquement par injection.

En l'espèce, les lentilles semi cylindriques sont orientées verticalement. Ainsi, un mouvement de gauche à droite ou de droite à gauche dans un plan sensiblement horizontal permet d'observer sélectivement l'une ou l'autre des images de l'ensemble d'images.

Dans un mode de réalisation, on prévoit que les images sont en noir et blanc, l'observation de l'une étant le contraste opposé de l'observation de l'autre. En l'espèce, l'une des images permet d'observer le dernier caractère du numéro d'immatriculation comme un caractère blanc sur fond noir, l'autre image permettant d'observer ledit dernier caractère numéro d'immatriculation comme un caractère noir sur fond blanc.

Avantageusement, le réseau lenticulaire est le même pour une pluralité de plaques d'immatriculations ; il peut donc être générique.

De préférence, l'épaisseur de la plaque acrylique est choisie de sorte à assurer la focalisation des lentilles du réseau lenticulaire sur l'ensemble d'au moins deux images du film rétro réfléchissant.

### Fonctionnement

### Fabrication & délivrance des plaques d'immatriculation

On prévoit un ensemble d'au moins une base de données. Chaque liste peut être enregistrée dans une base de données respective, dans une unique base de données, ou encore dans une pluralité de base de données. Par concision, ledit ensemble d'au moins une base de données est dénommé ci-après « la » base de données.

La base de données comprend au moins l'une des listes parmi :
- une liste des certificats d'enregistrement, donc des propriétaires de véhicules automobiles. Par simplification, on assimile ici la notion de propriétaire et celle de conducteur d'un véhicule automobile. Typiquement, la liste des certificats d'enregistrement est émise par une autorité administrative ou gouvernementale ;
- une liste des revendeurs de plaque d'immatriculation, chaque revendeur étant de préférence associé à un identifiant individuel ;
- une liste des numéros de série des plaques d'immatriculation. Il est alors possible de suivre le cycle de vie des plaques d'immatriculation, y compris vierges. Par exemple : la base de données enregistre la liste des plaques d'immatriculation associées un revendeur particulier, la liste des plaques d'immatriculation vierges utilisées et la liste des plaques d'immatriculation vierges restantes ; la liste de la plaque d'immatriculation ou des plaques d'immatriculation associées à un certificat d'enregistrement ou à un propriétaire donné, etc. ;

- une liste des offenses, éventuellement rattachée à la liste des numéros de série, répertoriant les certificats d'enregistrement, les propriétaires de véhicules automobiles ou des numéros de série de plaques d'immatriculation non autorisés (par exemple parce que le véhicule automobile a été déclaré volé, parce que le véhicule automobile a été déclaré comme présentant un défaut technique, par ce que le véhicule automobile ou le conducteur présente un défaut d'assurance, etc.) ;
- une liste dans laquelle sont enregistrées des informations relatives à des contrôles de véhicules automobiles, réalisés par exemple par un garagiste (contrôle technique), ou par des forces de police, et qui permet par exemple de savoir où et quand un véhicule automobile identifié notamment par son numéro d'immatriculation a été contrôlé, et éventuellement par qui...

L'association d'un ensemble de numéros de série de plaques d'immatriculation vierges à un revendeur donné permet d'éviter toute utilisation non officielle ou non autorisée par celui-ci d'un film rétro réfléchissant portant un numéro de série autre que l'un des numéros de série qui lui a été attribué.

On prévoit une étape préliminaire dans laquelle un certificat d'enregistrement, également appelée carte d'enregistrement ou carte grise, est généré à partir d'informations extraites de la base de données concernant le conducteur et le véhicule automobile, et distribué audit conducteur.

Dans un mode de réalisation, le certificat d'enregistrement comprend un code-barres 2D qui code certaines au moins des informations dudit certificat, ce qui permet une lecture facile et rapide par un capteur optique.

On prévoit une étape dans laquelle des plaques d'immatriculation vierges munie chacune d'une structure diffractive tel que précédemment décrite sont fournies à un revendeur de plaque d'immatriculation.

Le revendeur de plaque d'immatriculation est équipé du matériel suivant :
- un lecteur de codes-barres connecté à un ordinateur, ledit ordinateur étant susceptible d'établir une communication avec un réseau, en particulier l'Internet ; ou un objet communiquant équipé d'une application de lecture de codes-barres, ledit objet communiquant étant susceptible d'établir une communication avec un réseau, en particulier l'Internet,
- une imprimante spécifique aux plaques d'immatriculation,
- une plastifieuse (laminateur) de plaque d'immatriculation.

Par objet communiquant, on entend tout type d'objet portable susceptible d'exécuter certaines applications logicielles et d'établir une communication, en particulier radio ; et par exemple tout téléphone intelligent (Smartphone par anglicisme), PDA, tablette etc. En particulier, l'objet communiquant est susceptible d'établir une communication avec la base de données.

De préférence, l'imprimante spécifique comprend un plateau adaptable à l'alimentation et à l'empilement de plusieurs formats de plaque d'immatriculation ; par exemple 110 x 520 mm, 160 X 320 mm, 105 X 180 mm.

De préférence, l'imprimante spécifique comprend un scanner, ce qui permet de lire le numéro de série de la structure diffractive de chaque plaque d'immatriculation.

De préférence la résolution d'impression peut aller jusqu'à 1200 X 1200 dpi, ce qui permet d'avoir un effet moiré de qualité et une bonne définition du QR code.

Le laminateur permet de laminer la plaque rétro réfléchissante personnalisée sur la couche acrylique. A cet effet, la couche de protection de l'acrylique est détachée de la couche adhésive et la plaque est placée sur le laminateur avec la couche adhésive positionnée vers le haut. La plaque rétro réfléchissante personnalisée est alors placée vers le bas.

Le laminateur comprend des rouleaux qui permettent appliquer une pression suffisante pour assurer une bonne adhésion entre la couche acrylique et le film rétro réfléchissant, en outre sans créer de bulles.

Afin d'obtenir sa plaque d'immatriculation, un propriétaire de véhicule automobile présente tout d'abord sa carte d'enregistrement au revendeur.

Dans un premier temps, le revendeur identifie ledit propriétaire dans la base de données, par exemple en scannant le code barre 2D de la carte d'enregistrement, ou en entrant le numéro de la carte d'enregistrement dans une interface d'un logiciel spécifique.

Ensuite, le revendeur scanne la structure diffractive de la plaque d'immatriculation vierge, plus spécifiquement le numéro de la structure diffractive 230, c'est-à-dire en l'espèce le code barre 2D disposé sur le film rétro réfléchissant (film de sécurité).

Grâce à un logiciel spécialisé, ces données concernant le propriétaire et la plaque d'immatriculation vierge sont envoyées à la base de données.

Des vérifications sont alors faites au sein de la base de données afin de s'assurer que la carte d'enregistrement est enregistrée, que le propriétaire du véhicule automobile est autorisé, que le numéro de la structure diffractive et donc du film à personnaliser existe et est bien attribué au revendeur qui prétend réaliser la personnalisation du film, etc.

Lorsque toutes les vérifications sont effectuées et positives, c'est-à-dire lorsque les conditions précédentes sont réunies, l'impression de personnalisation sécurisée 200 est calculée, de préférence de manière cryptée, en fonction de l'un au moins des paramètres parmi
- l'identifiant du revendeur,
- le numéro de série de la structure diffractive de la plaque d'immatriculation vierge et
- le certificat d'enregistrement.

L'impression de personnalisation sécurisée est alors envoyée à l'objet communiquant du revendeur, par exemple soit depuis la base de données soit depuis un autre serveur.

Avantageusement, la plaque d'immatriculation dont le numéro de la structure diffractive est utilisé pour le calcul de la pression personnalisation est alors associée à la carte enregistrement du propriétaire dans la base de données.

Le logiciel spécifique du revendeur génère alors un fichier de données pour imprimer la plaque d'immatriculation correspondant à ladite carte enregistrement dudit propriétaire pour ladite plaque d'immatriculation, ledit fichier comprenant :
- le numéro d'immatriculation de la plaque d'immatriculation, comprenant un ensemble de caractères (en l'espèce alphanumériques),
- ladite impression de personnalisation 200, en l'espèce un code-barres 2D, et plus particulièrement un QR code, et
- ledit ensemble d'au moins deux images destiné à présenter un effet moiré.

Alternativement, le fichier d'impression peut être envoyé à l'objet communiquant depuis un serveur.

Le film rétro réfléchissant personnalisé est alors laminé avec la plaque acrylique grâce à un laminateur. La plaque d'immatriculation est alors prête à être fixée au véhicule automobile du propriétaire de préférence par un système de vis ou de rivets.

Une telle plaque d'immatriculation est facilement contrôlable, par exemple par une autorité, y compris par un contrôle visuel des différentes propriétés optiques de ladite plaque, sous lumière ambiante (de jour) comme en atmosphère sombre (de nuit), y compris sous éclairage d'une lampe de poche. Un contrôle numérique grâce à une application sur un objet communiquant (typiquement un téléphone intelligent) permet également de contrôler ladite plaque d'immatriculation, comme exposé ci-après.

### Vérification d'une plaque d'immatriculation

La vérification de la plaque d'immatriculation peut être visuelle. Elle comprend par exemple au moins l'une des étapes de vérification parmi :
- la vérification de la présence d'une structure diffractive sur celle-ci,
- la vérification de la correspondance du numéro d'immatriculation entre la plaque et le certificat d'enregistrement,
- la vérification de la correspondance entre le dernier caractère du numéro d'immatriculation et le caractère visible à travers le réseau lenticulaire,
- la vérification de l'aspect moiré du caractère visible à travers le réseau lenticulaire,
- la vérification de la présence d'un ou plusieurs filigranes.

A titre alternatif ou en complément, on peut prévoir une vérification numérique, c'est-à-dire par capteur optique.

À cet effet on prévoit une étape 1010 de lecture de l'impression de personnalisation sécurisée 200 (QR code) par un capteur optique, typiquement celui d'un téléphone intelligent.

On prévoit ensuite une étape 1020, avantageusement hors-ligne, consistant à décoder ledit QR code.

Si le QR code ne peut pas être décodé on peut prévoir une étape consistant à émettre un signal d'alarme.

Si le QR code est décodé, on peut prévoir une étape 1030 consistant à vérifier que ladite impression de personnalisation sécurisée décodée contient l'une au moins des données relatives au véhicule automobile parmi :
- le numéro d'immatriculation,
- le numéro du certificat d'enregistrement,
- le numéro de châssis,
- le numéro de moteur,
- le modèle,
- la couleur dudit véhicule automobile,
- etc.

De manière complémentaire, on peut également prévoir une étape 1040 de vérification dudit QR code décodé, par exemple vérifier que l'une au moins des données décodées parmi :
- le numéro d'immatriculation,
- le numéro du certificat d'enregistrement,
- le numéro de châssis,
- le numéro de moteur,
- le modèle de véhicule automobile,
- la couleur du véhicule automobile,
- etc.
est identique à l'élément ou la donnée qui lui correspond sur le certificat d'enregistrement ou sur le véhicule automobile.

On peut prévoir en outre une étape, avantageusement en ligne, consistant à comparer l'une au moins des données décodées avec les données correspondantes dans la base de données, ce qui permet par exemple de vérifier que le véhicule automobile ou son conducteur sont toujours autorisés à conduire entre la date de fabrication de la plaque d'immatriculation est la date vérification de celle-ci.

On peut prévoir en outre une étape consistant à télécharger des informations complémentaires relatives au conducteur ou au véhicule automobile, par exemple :
- une information sur d'éventuelles amendes ou infractions,
- une information quant à savoir si le conducteur et le véhicule automobile sont assurés,
- une information quant à savoir si une taxe de circulation (par exemple vignette, taxe de congestion ou « congestion charge » en langue anglaise, etc.) a bien été payée.

### Nomenclature

- 100: Plaque d'immatriculation
- 110: structure diffractive
- 111: couche réflective métallique
- 112: couche d'adhésif à chaud
- 113: couche de détachement
- 114: vernis holographique
- 115: couche d'adhésif à froid
- 116: film protecteur de la structure diffractive
- 117: vernis de protection de la structure diffractive
- 118: symbole de la structure diffractive qui présente un effet achromatique
- 119: symbole de la structure diffractive qui présente un effet visuel d'embossage
- 120: support de plaque d'immatriculation
- 130: plaque acrylique
- 140: film rétro réfléchissant
- 141: perles de verre
- 142: couche protectrice du film rétro réfléchissant
- 143: couche de scellage opaque
- 144: couche d'adhésif de la couche de scellage opaque
- 145: couche protectrice de la couche de scellage opaque
- 146: couche rétro réfléchissante
- 150: couche d'adhésif entre plaque acrylique et film rétroréfléchissant
- 160: couche d'adhésif sur le support de plaque
- 170: filigrane
- 180: film protecteur de la plaque acrylique
- 190: réseau lenticulaire
- 200: impression de personnalisation sécurisée
- 210: numéro d'immatriculation
- 220: ensemble d'au moins deux images
- 230: numéro de série de la structure diffractive
- 300: véhicule automobile
- INT: face interne
- EXT: face externe
- 1000: Fabrication d'une plaque d'immatriculation
- 1010: Réalisation d'une capture optique de l'impression de personnalisation sécurisée
- 1020: Décodage de l'impression de personnalisation sécurisée
- 1030: Vérification de l'impression de personnalisation sécurisée (existence de données)
- 1040: Vérification de l'impression de personnalisation sécurisée (correspondance de données)

## Revendications

1. Plaque d'immatriculation (100) pour véhicule automobile, présentant une face interne (INT) destinée à être au contact dudit véhicule automobile, et une face externe (EXT) destinée à pouvoir être lue visuellement ou par capteur optique, et comprenant :
- un support (120) de plaque d'immatriculation du véhicule,
- un film rétro réfléchissant (140), au contact direct dudit support ou par l'intermédiaire d'une couche d'adhésif (160),
- le film rétro réfléchissant supportant un numéro d'immatriculation (210) du véhicule automobile, imprimé sur celui-ci, et
- une structure diffractive (110), collée sur le film rétro réfléchissant, et
- une impression de personnalisation sécurisée (200), solidaire du film rétro réfléchissant et/ou de la structure diffractive,
**caractérisée en ce qu'**elle comprend en outre :
- une plaque acrylique (130), transparente, au contact direct du film rétro réfléchissant, ou par l'intermédiaire d'une couche d'adhésif (150), et
- un ensemble (220) d'au moins deux images, solidaires du film rétro réfléchissant et destinées à présenter un effet moiré, et un réseau lenticulaire (190), apposé au droit de l'ensemble desdites au moins deux images.

2. Plaque d'immatriculation selon la revendication 1, dans laquelle le réseau lenticulaire (190) est intégré à la plaque acrylique (130).

3. Plaque d'immatriculation selon l'une quelconque des revendications précédentes, dans laquelle la structure diffractive est numérotée, destructible, et partiellement démétallisée.

4. Plaque d'immatriculation selon la revendication 3, dans laquelle l'impression de personnalisation sécurisée est imprimée sur la partie démétallisée de la structure diffractive.

5. Plaque d'immatriculation selon l'une quelconque des revendications précédentes, dans laquelle la structure diffractive se présente sous forme d'étiquette autocollante et comprend l'empilement des couches successives suivant :
- une couche d'adhésif à froid (115), destinée à coller la structure diffractive sur le film rétro réfléchissant ;
- une couche partielle de détachement (113);
- une couche réflective (111) en partie démétallisée ;
- une couche de vernis holographique (114) ;
- un film protecteur (116) ;
Ou l'empilement des couches successives suivant :
- une couche d'adhésif à froid (115), destinée à coller la structure diffractive sur le film rétro réfléchissant ;
- une couche réflective (111) en partie démétallisée ;
- une couche de vernis holographique (114);
- une couche partielle de détachement (113) ; et
- un film protecteur (116).

6. Plaque d'immatriculation selon l'une quelconque des revendications 1 à 4, dans laquelle la structure diffractive se présente sous forme de marquage à chaud, et comprend l'empilement des couches successives suivant :
- une couche d'adhésif pour transfert à chaud éventuellement réticulable (112), destinée à coller la structure diffractive sur le film rétro réfléchissant ;
- une couche réflective (111) en partie démétallisée ;
- une couche de vernis holographique (114) ; et
- une couche de vernis de protection (117).

7. Plaque d'immatriculation selon l'une quelconque des revendications précédentes, dans la structure diffractive comprend au moins une représentation graphique parmi :
- une représentation graphique (118) qui présente un effet optique achromatique,
- une représentation graphique (119) qui présente un effet visuel d'embossage, et
- une représentation graphique qui présente un effet de grand angle en fonction de l'angle d'observation.

8. Plaque d'immatriculation selon l'une quelconque des revendications précédentes, dans laquelle le numéro d'immatriculation comprend un ensemble de caractères, les deux images représentant le dernier caractère du numéro d'immatriculation.

9. Plaque d'immatriculation selon l'une quelconque des revendications précédentes, dans laquelle l'encre utilisée pour l'impression de personnalisation sécurisée contient un pigment de sécurité ou un marqueur, le film rétro réfléchissant pouvant en outre comprendre un ensemble d'au moins un filigrane (170).

10. Procédé de vérification d'une plaque d'immatriculation d'un véhicule automobile, comprenant des étapes consistant à :
- fabriquer (1000) une plaque d'immatriculation selon l'une quelconque des revendications précédentes, et sur la plaque d'immatriculation ainsi fabriquée :
- réaliser (1010) une capture optique de l'impression de personnalisation sécurisée,
- décoder (1020) ladite impression de personnalisation sécurisée,
- vérifier (1030) que ladite impression de personnalisation sécurisée décodée contient l'une au moins des données relatives au véhicule automobile parmi :
- le numéro d'immatriculation,
- le numéro du certificat d'enregistrement,
- le numéro de châssis,
- le numéro de moteur,
- le modèle,
- la couleur dudit véhicule automobile ;
le procédé comprenant optionnellement en outre une étape consistant à vérifier (1040) que ladite donnée décodée est identique à une donnée correspondante inscrite sur le véhicule automobile, sur le moteur ou sur un certificat d'enregistrement dudit véhicule automobile.

## Patentansprüche

1. Kennzeichen (100) für ein Kraftfahrzeug, welches eine Innenseite (INT), die dazu bestimmt ist, sich mit dem Kraftfahrzeug in Kontakt zu befinden, und eine Außenseite (EXT), die dazu bestimmt ist, visuell oder von einem optischen Sensor gelesen werden zu können, aufweist und umfasst:
- einen Träger (120) des Kennzeichens des Fahrzeugs,
- eine retroreflektierende Folie (140), die sich in direktem Kontakt mit dem Träger befindet, oder über eine Klebstoffschicht (160),
- wobei die retroreflektierende Folie eine Zulassungsnummer (210) des Kraftfahrzeugs trägt, die auf sie aufgedruckt ist, und
- eine diffraktive Struktur (110), die auf die retroreflektierende Folie geklebt ist, und
- einen sicheren Personalisierungsaufdruck (200), der mit der retroreflektierenden Folie und/oder mit der diffraktiven Struktur fest verbunden ist,
**dadurch gekennzeichnet, dass** es außerdem umfasst:
- eine durchsichtige Acrylplatte (130), die sich in direktem Kontakt mit der retroreflektierenden Folie befindet, oder über eine Klebstoffschicht (150), und
- eine Anordnung (220) von wenigstens zwei Bildern, die mit der retroreflektierenden Folie fest verbunden sind und dazu bestimmt sind, einen Moire-Effekt zu bewirken, und ein Linsenraster (190), das genau gegenüber der Anordnung der wenigstens zwei Bilder angebracht ist.

2. Kennzeichen nach Anspruch 1, wobei das Linsenraster (190) in die Acrylplatte (130) integriert ist.

3. Kennzeichen nach einem der vorhergehenden Ansprüche, wobei die diffraktive Struktur nummeriert, zerstörbar und teilweise entmetallisiert ist.

4. Kennzeichen nach Anspruch 3, wobei der sichere Personalisierungsaufdruck auf den entmetallisierten Teil der diffraktiven Struktur aufgedruckt ist.

5. Kennzeichen nach einem der vorhergehenden Ansprüche, wobei die diffraktive Struktur die Form eines selbstklebenden Etiketts aufweist und den folgenden Stapel aufeinander folgender Schichten umfasst:
- eine Schicht Kaltkleber (115), die dazu bestimmt ist, die diffraktive Struktur auf die retroreflektierende Folie zu kleben;
- eine Ablöse-Teilschicht (113);
- eine teilweise entmetallisierte reflektierende Schicht (111);
- eine Schicht aus holographischem Lack (114);
- einen Schutzfilm (116);
oder den folgenden Stapel aufeinander folgender Schichten:
- eine Schicht Kaltkleber (115), die dazu bestimmt ist, die diffraktive Struktur auf die retroreflektierende Folie zu kleben;
- eine teilweise entmetallisierte reflektierende Schicht (111);
- eine Schicht aus holographischem Lack (114);
- eine Ablöse-Teilschicht (113); und
- einen Schutzfilm (116).

6. Kennzeichen nach einem der Ansprüche 1 bis 4, wobei die diffraktive Struktur die Form einer Heißprägung aufweist und den folgenden Stapel aufeinander folgender Schichten umfasst:
- eine Schicht von eventuell vernetzbarem Thermotransfer-Klebstoff (112), die dazu bestimmt ist, die diffraktive Struktur auf die retroreflektierende Folie zu kleben;
- eine teilweise entmetallisierte reflektierende Schicht (111);
- eine Schicht aus holographischem Lack (114); und
- eine Schutzlackschicht (117).

7. Kennzeichen nach einem der vorhergehenden Ansprüche, wobei die diffraktive Struktur wenigstens eine graphische Darstellung von folgenden umfasst:
- eine graphische Darstellung (118), welche einen achromatischen optischen Effekt aufweist,
- eine graphische Darstellung (119), welche einen visuellen Prägungseffekt aufweist, und
- eine graphische Darstellung, welche in Abhängigkeit vom Betrachtungswinkel einen Weitwinkeleffekt aufweist.

8. Kennzeichen nach einem der vorhergehenden Ansprüche, wobei die Zulassungsnummer eine Gruppe von Zeichen umfasst, wobei die zwei Bilder das letzte Zeichen der Zulassungsnummer darstellen.

9. Kennzeichen nach einem der vorhergehenden Ansprüche, wobei die für den sicheren Personalisierungsaufdruck verwendete Farbe ein Sicherheitspigment oder einen Marker enthält, wobei die retroreflektierende Folie außerdem eine Anordnung von wenigstens einem Wasserzeichen (170) umfassen kann.

10. Verfahren zur Verifizierung eines Kennzeichens eines Kraftfahrzeugs, welches die folgenden Schritte umfasst:
- Herstellen (1000) eines Kennzeichens nach einem der vorhergehenden Ansprüche, und auf dem so hergestellten Kennzeichen:
- Durchführen (1010) einer optischen Erfassung des sicheren Personal isierungsaufdrucks,
- Decodieren (1020) des sicheren Personalisierungsaufdrucks,
- Verifizieren (1030), dass der decodierte sichere Personalisierungsaufdruck wenigstens eine von folgenden das Kraftfahrzeug betreffenden Angaben enthält:
- die Zulassungsnummer,
- die Nummer der Zulassungsbescheinigung,
- die Fahrgestellnummer,
- die Motornummer,
- das Modell,
- die Farbe des Kraftfahrzeugs;
wobei das Verfahren optional außerdem einen Schritt umfasst, der darin besteht zu verifizieren (1040), dass die decodierte Angabe mit einer entsprechenden Angabe identisch ist, die am Kraftfahrzeug, am Motor oder auf einer Zulassungsbescheinigung des Kraftfahrzeugs vermerkt ist.

## Claims

1. Registration plate (100) for a motor vehicle, having an internal face (INT) intended to be in contact with said motor vehicle, and an external face (EXT) intended to be able to read visually or by an optical sensor, and comprising:
- a vehicle registration plate support (120),
- a retro-reflecting film (140), in contact with said support directly or via an adhesive layer (160),
- the retro-reflecting film supporting a registration number (210) of the motor vehicle, printed thereon, and
- a diffractive structure (110), glued onto the retro-reflecting film, and
- a secure customization print (200), secured to the retro-reflecting film and/or the diffractive structure,
**characterized in that** it also comprises:
- a transparent acrylic plate (130), in contact with the retro-reflecting film directly, or via an adhesive layer (150), and
- a set (220) of at least two images, secured to the retro-reflecting film and intended to present a moire effect, and a lens array (190), affixed in line with the set of said at least two images.

2. Registration plate according to Claim 1, wherein the lens array (190) is incorporated in the acrylic plate (130).

3. Registration plate according to either one of the preceding claims, wherein the diffractive structure is numbered, destructible, and partially demetallized.

4. Registration plate according to Claim 3, wherein the secure customization print is printed on the demetallized part of the diffractive structure.

5. Registration plate according to any one of the preceding claims, wherein the diffractive structure takes the form of a self-adhesive label and comprises the following stack of successive layers:
- a cold adhesive layer (115), intended to glue the diffractive structure onto the retro-reflecting film;
- a partial detachment layer (113);
- a partly demetallized reflective layer (111);
- a layer of holographic lacquer (114);
- a protective film (116);
or the following stack of successive layers:
- a cold adhesive layer (115), intended to glue the diffractive structure onto the retro-reflecting film;
- a partly demetallized reflective layer (111);
- a layer of holographic lacquer (114);
- a partial detachment layer (113); and
- a protective film (116).

6. Registration plate according to any one of Claims 1 to 4, wherein the diffractive structure takes the form of hot marking, and comprises the following stack of successive layers:
- a layer of adhesive for hot transfer, possibly cross-linkable (112), intended to glue the diffractive structure onto the retro-reflecting film;
- a partly demetallized reflective layer (111);
- a layer of holographic lacquer (114); and
- a layer of protective lacquer (117).

7. Registration plate according to any one of the preceding claims, wherein the diffractive structure comprises at least one graphic representation out of:
- a graphic representation (118) which exhibits an achromatic optical effect,
- a graphic representation (119) which exhibits an embossing visual effect, and
- a graphic representation which exhibits a wide angle effect according to the angle of observation.

8. Registration plate according to any one of the preceding claims, wherein the registration number comprises a set of characters, the two images representing the last character of the registration number.

9. Registration plate according to any one of the preceding claims, wherein the ink used for the secure customization print contains a security pigment or a marker, the retro-reflecting film also being able to comprise a set of at least one watermark (170).

10. Method for checking a registration plate of a motor vehicle, comprising steps consisting in:
- manufacturing (1000) a registration plate according to any one of the preceding claims, and on the duly manufactured registration plate:
- producing (1010) an optical capture of the secure customization print,
- decoding (1020) said secure customization print,
- checking (1030) that said decoded secure customization print contains at least one of the data relating to the motor vehicle out of:
- the registration number,
- the number of the certificate of registration,
- the chassis number,
- the engine number,
- the model,
- the colour of said motor vehicle;
the method optionally further comprising a step consisting in checking (1040) that said decoded datum is identical to a corresponding datum inscribed on the motor vehicle, on the engine or on a certificate of registration of said motor vehicle.
